# EUROPÄISCHE PATENTSCHRIFT

(11) **EP 0 504 782 B1**
(45) Veröffentlichungstag und Bekanntmachung des Hinweises auf die Patenterteilung: **26.04.1995**
(21) Anmeldenummer: 92104533.2
(22) Anmeldetag: 17.03.1992
(51) Int. Cl.: F16B 25/00, B21H 3/02

(54) **Schraube, Verfahren und Walzbacken zu ihrer Herstellung**
Screw, method and rolling die for manufacturing the same
Vis, procédé et matrice de laminage pour sa fabrication

(30) Priorität: 18.03.1991 DE 4108771
(43) Veröffentlichungstag der Anmeldung: 23.09.1992
(73) Patentinhaber: Adolf Würth GmbH & Co. KG, D-74653 Künzelsau (DE)
(72) Erfinder: Schuster, Armin, W - 7119 Forchtenberg (DE)
(74) Vertreter: Patentanwälte Ruff, Beier, Schöndorf und Mütschele

(56) Entgegenhaltungen:
- CH-A- 557 964
- DE-A- 2 251 115
- DE-A- 2 405 430
- DE-A- 2 747 312
- DE-A- 3 207 975
- DE-B- 2 318 088
- GB-A- 1 511 856
- US-A- 2 021 704
- US-A- 3 794 092
- US-A- 4 255 959
- KUNSTSTOFFE. Bd. 74, Nr. 7, Juli 1984, MUNCHEN DE Seite 413; 'Schaube mit Spezialgewinde zum Verbinden von Kunststoffbauteilen'

## Beschreibung

Die Erfindung betrifft eine Schraube, insbesondere eine Spanplattenschraube sowie ein Verfahren und Walzbacken zu ihrer Herstellung.

Spanplatten sind seit langer Zeit als Ersatz für Holz bekannt und werden ähnlich verarbeitet wie Holz. Sie haben jedoch teilweise andere Eigenschaften als Holz, was sich insbesondere dann zeigt, wenn man Schrauben verwendet. Da das Fasermaterial des normalen Holzes bei Spanplatten nicht mehr gegeben ist, besteht insbesondere die Gefahr, daß Spanplattenschrauben ausreißen und die Spanplatte ausbricht.

Es ist bereits eine Schraube bekannt (DE-A-22 51 115), die zur Verbesserung der Haltekraft in Werkstoffen mit geringer Dichte ein unsymmetrisch ausgebildetes Gewinde aufweist, bei dem die Vorderflanke flacher als die Hinterflanke verläuft.

Ebenfalls bekannt ist eine selbstschneidende Schraube (DE-B-23 18 088), die ebenfalls für hochwertige Spanplatten geeignet ist. Diese Schraube enthält ebenfalls ein Gewinde mit unsymmetrischem Profil, wobei zusätzlich die Schneidkanten gewellt sind. Der eine Gewindegang setzt sich bis zur Spitze der Schraube fort.

Bei gewindeselbstformenden Schrauben, die zum Einsatz in Kunststoff bestimmt sind (DE-A-32 07 975) ist es bekannt, die Gewindeflanken eines symmetrischen Gewindeprofils mit einem abgerundeten Übergang zum Gewindeschaft zu versehen. Mit diesem abgerundeten Übergang soll erreicht werden, daß der sich während des Einschraubvorgangs erheblich erwärmende Kunststoff in die Gewindetäler hineinfließt. Dadurch soll eine Beschädigung durch Rißbildung des Kunststoffs vermieden werden.

Der Erfindung liegt die Aufgabe zugrunde, eine insbesondere für Spanplatten verwendbare Schraube zu schaffen, die einen geringeren Eindrehwiderstand, ein größeres Überdrehmoment sowie verbesserte Auszugswerte aufweist und sich schnell einschrauben läßt.

Zur Lösung dieser Aufgabe schlägt die Erfindung eine Schraube mit den Merkmalen des Anspruchs 1 vor.

Während man bei den bekannten Spanplattenschrauben versucht, die Gewindegänge möglichst scharfkantig an den Schraubenkern anzusetzen, verwendet die Erfindung absichtlich einen abgerundeten Übergang, der die Kerbwirkung verringert. Dadurch erhöht sich die Festigkeit der Gewindegänge an der Schraube. Der Krümmungsradius des abgerundeten Übergangs kann beispielsweise zwischen einem Achtel und einem Zwölftel des Nenndurchmessers der Schraube liegen, mit Vorteil bei etwa einem Zehntel des Nenndurchmessers.

Da die Festigkeit der Schraube erhöht wird, kann die Schraube nach der Erfindung in Weiterbildung auch so ausgestaltet werden, daß das Verhältnis von Außendurchmesser zu Kerndurchmesser der Schraube größer ist als bei bekannten Schrauben gleichen Nennmaßes. Dies heißt mit anderen Worten, daß bei einer Schraube mit gleichem Nennmaß die erfindungsgemäße Schraube einen etwas dünneren Kern hat als die bekannten Schrauben. Es ergibt sich ohne weiteres, daß sich dadurch der Einschraubwiderstand nochmals verringert.

Um das Eindrehen der Schraube in die Spanplatte zu erleichtern, kann erfindungsgemäß vorgesehen sein, daß die Schraube im Bereich ihrer Schraubenspitze mindestens eine Schabenut aufweist. Diese Schabenut soll beim Herstellen des von der Schraubenspitze begonnenen Lochs unterstützend mitwirken. Insbesondere kann vorgesehen sein, daß die Schabenut die Form einer in Längsrichtung der Schrauben verlaufenden Kerbe aufweist. Die Kerbe kann insbesondere von zwei sich treffenden Begrenzungsflächen begrenzt werden, die beispielsweise einen Winkel von etwa 90° miteinander einschließen können.

Erfindungsgemäß kann vorgesehen sein, daß die Schabenut das Gewinde bzw. den Gewindegang durchsetzt und etwa bis auf den Kern der Schraube reicht. Gegebenenfalls kann sie auch bis etwa in den Kern der Schraubenspitze hinein reichen.

Insbesondere schlägt die Erfindung in Weiterbildung vor, daß die Schabenut vor dem Ende der Schraubenspitze enden kann, also nicht bis in den zylindrischen Teil des Schraubenschaftes hineinreicht. Die Schabenut soll nicht das Kernloch vergrößern, sondern nur beim Herstellen eines dem Kerndurchmesser der Schraube entsprechenden Loches unterstützend mitwirken.

Zum schnelleren Eindrehen der Schraube kann erfindungsgemäß das Gewinde als Doppelgang-Gewinde ausgebildet sein.

Zur Vergrößerung der Haltekraft bzw. Verbesserung des Überdrehmomentes weist das Gewinde mindestens über einen Teil der Schaftlänge eine unsymmetrische Form auf, wobei insbesondere die vordere, d.h. der Schraubenspitze zugewandte Flanke des Gewindeganges flacher als die hintere, d.h. dem Schraubenkopf zugewandte Flanke des Gewindeganges verläuft. Die hintere Flanke soll sich erfindungsgemäß einem rechten Winkel gegenüber der Schraubenlängsachse annähern, soweit dies bei der Herstellung der Schraube durch Walzen möglich ist. Aus praktischen Gründen soll der Winkel, den die hintere Flanke mit einer Radialebene einschließt, kleiner als etwa 10° sein. Bei einem bevorzugten Ausführungsbeispiel beträgt der Winkel 5°.

Die vordere Flanke kann erfindungsgemäß mit der erwähnten Radialebene einen Winkel von etwa 30 bis 40° einschließen, bei einem bevorzugten Ausführungsbeispiel etwa 35°.

Die Gewindegänge selbst werden insgesamt nicht schärfer als bei den bekannten Gewinden, jedoch ändert sich die Form gegenüber den bisher symmetrischen Gewinden.

Für das schnelle Einschrauben der Schraube ist es erforderlich, daß der Gewindegang, bei einem doppelgängigen Gewinde einer der beiden Gewindegänge, bis möglichst weit an die Spitze heranreicht. Denn erst, wenn das Gewinde in die Spanplatte eindringt, kann der Vorschub aufgrund des Gewindes erfolgen. Der Erfinder der vorliegenden Anmeldung hat herausgefunden, daß das Auswalzen des an sich gewünschten asymmetrisch ausgebildeten Gewindeganges bis an die Spitze der Schraube schwierig ist. Das Gewinde läßt sich in dieser Weise nur mit erhöhtem Aufwand mit der ausreichenden Genauigkeit herstellen. Um nun trotzdem die Schraube so auszubilden, daß sie schnell faßt, wird von der Erfindung in Weiterbildung vorgeschlagen, das Gewinde im Bereich der Schraubenspitze weniger asymmetrisch bis symmetrisch auszubilden. In dem Bereich der Schraube, der von dem zylindrischen Schaft ausgehend sich nach vorne verjüngt, wird das Gewinde also weniger asymmetrisch bis symmetrisch ausgebildet, so daß beide Gewindeflanken gegenüber einer Senkrechten zur Längsachse der Schraube im wesentlichen den gleichen Winkel aufweisen.

In Weiterbildung wird vorgeschlagen, daß in diesem vorderen Bereich der Schraubenspitze der Flankenwinkel des Gewindes größer ist als im Bereich des zylindrischen Schaftes.

Es hat sich nun herausgestellt, daß durch die symmetrische Ausbildung des Gewindes im Bereich der Schraubenspitze die Möglichkeit gegeben ist, das Gewinde in wiederholbarer Weise direkt bis zur Spitze auszubilden, ohne daß Nachteile hinsichtlich der weiter gewünschten Eigenschaften, nämlich der verbesserten Auszugswerte und des größeren Überdrehmomentes, auftreten.

Bei einem Doppelganggewinde schlägt die Erfindung vor, einen Gewindegang bis zur Spitze auszubilden, den zweiten Gewindegang dagegen im Übergangsbereich zur Spitze der Schraube auslaufen zu lassen.

Der bis zur Gewindespitze reichende Gewindegang, der über den gesamten Schaft eine unsymmetrische Form aufweist, weist im Bereich der Spitze die erwähnte mindestens angenäherte symmetrische Form, ggf. mit dem vergrößerten Flankenwinkel, auf.

Der Erfindung liegt ebenfalls die Aufgabe zugrunde, einen Walzbacken zu schaffen, mit dem sich eine Schraube der eingangs genannten Art fertigen läßt. Zur Lösung dieser Aufgabe schlägt die Erfindung einen Walzbacken mit den Merkmalen des Anspruchs 13 vor.

Zur Herstellung der Schraube bzw. zur Ausbildung ihres Gewindes schlägt die Erfindung ein Verfahren mit den Merkmalen des Anspruchs 14 vor.

Somit weist das Verfahren diejenigen Merkmale auf, die im Zusammenhang mit der Schraube erwähnt sind. Das gleiche gilt für den Walzbacken.

Weitere Merkmale, Einzelheiten und Vorzüge der Erfindung ergeben sich aus der folgenden Beschreibung einer bevorzugten Ausführungsform der Erfindung, den Patentansprüchen sowie anhand der Zeichnung. Hierbei zeigen
- Fig. 1: eine Seitenansicht des vorderen Bereichs einer Spanplattenschraube nach der Erfindung;
- Fig. 2: einen Querschnitt durch die Schraube etwa in Höhe der Schabenut;
- Fig. 3: in vergrößertem Maßstab einen Teilschnitt durch die Schraube, der die Querschnittsform des Gewindeganges zeigt;
- Fig. 4: die teilweise geschnittene Seitenansicht einer weiteren Schraube;
- Fig. 5: die Aufsicht auf eine Walzbacke zur Herstellung der Schraube; und
- Fig. 6: einen vergrößerten Schnitt durch die Walzbacke.

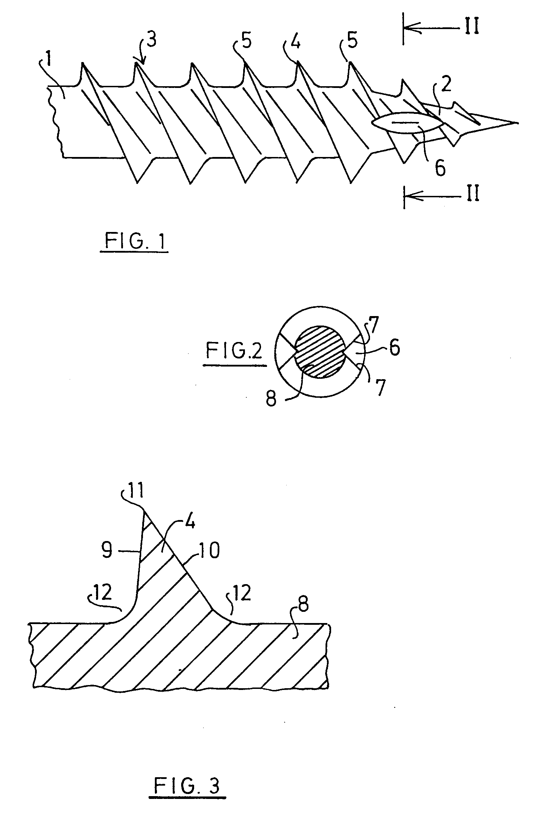

Die in Fig. 1 teilweise dargestellte Schraube enthält am einen Ende ihres Schraubenschaftes 1 einen in der Figur nicht dargestellten Schraubenkopf, der mit einer Antriebsmöglichkeit für ein Werkzeug versehen ist. Am gegenüberliegenden Ende des Schraubenschaftes setzt sich dieser in einer Schraubenspitze 2 fort, die eine Spitze mit einem Winkel von etwa 24° bildet. Längs des Schraubenschaftes 1 erstreckt sich ein Gewinde 3, das sich bis in den Bereich der Schraubenspitze 2 fortsetzt. Im Bereich der Gewindespitze 2 nimmt die Höhe der Gewindegänge 4, 5 ab. Ein Gewindegang 4 beginnt unmittelbar an dem vorderen Ende der Schraubenspitze 2, während der zweite Gewindegang 5 erst in einem gewissen Abstand von dem Ende der Schraubenspitze 2 beginnt.

Der Schraubenschaft 1 hat bis zum Beginn der Schraubenspitze 2 überall den gleichen Kerndurchmesser, und auch das Gewinde 3 hat längs des Schraubenschaftes 1 überall den gleichen Außendurchmesser, der dem Nenndurchmesser der Schraube entspricht.

Im Bereich der Schraubenspitze 2 ist eine Schabenut 6 in die Schraube eingeformt, die vorzugsweise beim Walzen der Schraube mit hergestellt wird. Die Schabenut 6 enthält die Form einer Kerbe und erstreckt sich in Längsrichtung der Schraube. Sie beginnt in einem etwa der Gewindesteigung entsprechenden Abstand vor dem vorderen Ende der Schraubenspitze 2 und endet etwa in dem Bereich, in dem die Schraubenspitze 2 in den zylindrischen Teil des Schraubenschaftes 1 übergeht. Die Schabenut 6 ist im wesentlichen in den Gewindegängen 4, 5 ausgebildet, zerschneidet also die Gewindegänge und nicht den Kern.

Wie aus Fig. 2 zu entnehmen ist, die einen Querschnitt durch die Schraube zeigt, sind zwei derartige Schabenuten 6 in Form je einer Kerbe angeordnet. Beide Kerben sind von zwei im wesentlichen ebenen Begrenzungsflächen 7 begrenzt. Im dargestellten bevorzugten Fall schließen beide Begrenzungsflächen einen etwa rechten Winkel miteinander an. Die Kerbe ist, wie bereits erwähnt, im wesentlichen in den Gewindegängen 4 bzw. 5 angeordnet und reicht nur etwa bis in den Kern 8 der Schraube hinein.

Fig. 3 zeigt in stark vergrößertem Maßstab einen Teilschnitt durch die Schraube, aus der sich die Querschnittsform eines Gewindeganges 4 ergibt. Die Schraube der Fig. 3 ist in gleicher Richtung wie die Schraube der Fig. 1 orientiert. Der Gewindegang wird von zwei Flanken 9, 10 begrenzt, die im Querschnitt geradlinig verlaufen und sich zur Bildung der Schraubenlinie 11 treffen. Die der rechts in der Zeichnung zu denkenden Schraubenspitze 2 zugewandte Flanke 10 wird als vordere Flanke bezeichnet, während die dem Schraubenkopf zugewandte Flanke 9 des Gewindeganges 4 als hintere Flanke bezeichnet wird. Wie die Fig. 3 ergibt, ist die vordere Flanke 10 stärker geneigt als die hintere Flanke 9. Die hintere Flanke 9 verläuft fast unter einem rechten Winkel gegenüber der Längsachse der Schraube, während die vordere Flanke 10 des Gewindeganges 4 mit der Längsachse der Schraube einen stumpfen Winkel von deutlich mehr als 90° einschließt. Dies läßt sich auch so formulieren, daß die hintere Flanke 9 gegenüber einer Radialebene einen Winkel von weniger als 10° aufweist, während die vordere Flanke 10 gegenüber der Radialebene einen Winkel von etwa 30 bis 40° aufweist, vorzugsweise etwa 35°. Das asymmetrische Gewinde ist zur Erreichung der verbesserten Überdrehmomente von Vorteil.

Wie der Schnitt der Fig. 3 ebenfalls darstellt, verlaufen die Übergänge 12 zwischen dem Kern 8 der Schraube und den Flanken 9 bzw. 10 des Gewindeganges 4 abgerundet. Der Krümmungsradius dieses abgerundeten Übergangs 12 beträgt etwa ein Zehntel des Nenndurchmessers der Schraube. Bei einem Nenndurchmesser von 6 mm beträgt der Radius also etwa 0,5 mm.

Aufgrund dieser gewollt deutlich abgerundeten Übergänge 12 vergrößert sich die Festigkeit der Schraube.

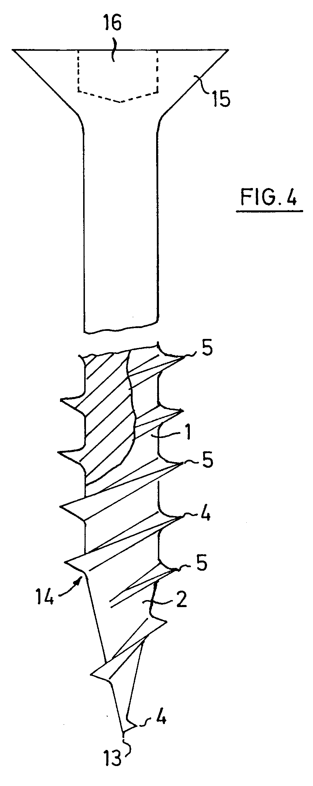

Die in Fig. 4 dargestellte Schraube weist keine Schabenut im Bereich der Spitze auf, könnte jedoch ebenfalls ähnlich wie die Ausführungsform nach Fig. 1 bis 3 mit einer Schabenut versehen sein.

Das Gewinde bei der Schraube nach Fig. 4 ist wiederum ein Doppelganggewinde mit zwei Gewindegängen 4, 5. Einer der beiden Gewindegänge 4 reicht bis unmittelbar an das vordere Ende 13 der Schraubenspitze 2. Der andere Gewindegang 5 läuft im Bereich des Übergangs 14 zwischen dem zylindrischen Schraubenschaft 1 und der im wesentlichen kegelförmigen Schraubenspitze 2 aus. Von der Stelle des Übergangs 14 verringert sich die Höhe des Gewindeganges 5, so daß dieser nach etwa einer viertel Umdrehung verschwindet.

Im Bereich der Schraubenspitze 2, d.h. zwischen dem Übergang 14 und dem vorderen Ende 13 ist der Gewindegang 4, der bis zum vorderen Ende 13 reicht, mit einem symmetrisch ausgebildeten Profil versehen. Dies heißt, daß die vordere und hintere Flanke des Gewindegangs 5 in diesem erwähnten Bereich gegenüber einer Senkrechten zur Schraubenlängsachse den gleichen Winkel aufweisen. Auf diese Weise wird es leichter möglich, diesen Gewindegang 4 vollständig bis zum vorderen Ende 13 der Schraube auszubilden. Dies bedeutet, daß die Schraube beim Beginn des Eindrehens sofort faßt. Das sofortige Fassen der Schraube mit ihrem Gewindegang ist aber wesentlich für das schnelle Einschraubverhalten der Schraube.

Es hat sich herausgestellt, daß die symmetrische Ausgestaltung des Gewindes in diesem vorderen Bereich keine Nachteile bzgl. der Tragfestigkeit und des Überdrehmoments mit sich bringt.

Es ist auch möglich, das Gewinde im vorderen Bereich weniger unsymmetrisch auszubilden als im Schaftbereich. Auch in diesem Fall läßt sich das Gewinde bis zur Spitze auswalzen.

Durch die Kombination verschiedener Merkmale entsteht eine Schraube, die sich einfach herstellen läßt und die einen geringen Eindrehwiderstand und damit ein schnelles Einschraubverhalten aufweist und bei der das Überdrehmoment und die Auszugswerte hohe Werte aufweisen.

Fig. 4 zeigt im oberen Bereich noch den Schraubenkopf 15 in Form eines Senkkopfs mit der darin angeordneten Antriebsausnehmung 16, die nur schematisch dargestellt ist.

Der Flankenwinkel des Gewindes im Schaftbereich beträgt etwa 35°, während der Flankenwinkel des bis zum vorderen Ende 13 reichenden Gewindegangs 4 etwa 40° beträgt.

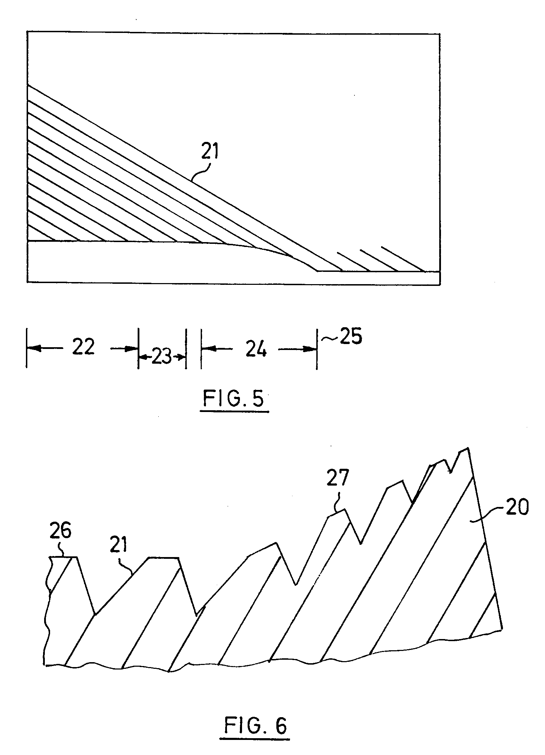

Fig. 5 zeigt eine Aufsicht auf einen Walzbacken 20, wie er zur Herstellung der Schraube nach den Figuren 1 bis 4 verwendet wird. Der Walzbacken weist das unter dem Steigungswinkel verlaufende Gewindegegenprofil 21 auf. Von der in Fig. 5 linken Seite her enthält der Walzbacken zunächst einen Einlaufbereich 22, siehe den entsprechenden Doppelpfeil unter dem Walzbacken 20. In diesem Einlaufbereich wird das Gewinde zunächst hergestellt. Es kann dabei schon asymmetrisch sein, bevorzugt wird jedoch ein Walzbacken bzw. eine Herstellung, bei der im Einlaufbereich das Gewinde zunächst noch symmetrisch ist.

An den Einlaufbereich 22 schließt sich ein Übergangsbereich 23 an. Im Übergangsbereich 23 wird das vorhandene Gewinde in die gewünschte endgültige asymmetrische Form umgeformt.

Am Ende des Übergangsbereichs ist das Gewinde des Schafts der Schraube vollständig hergestellt und in seine endgültige Form gebracht. Es schließt sich nun ein dritter Bereich 24 an, in dem die Spitze der Schraube geformt und mit Gewinde versehen wird. Das Ausbilden der Spitze geschieht also erst nach dem vollständigen Fertigstellen des Schaftgewindes der Schraube. Am Ende des Spitzenformungsbereiches 24 ist der Abscherpunkt 25 erreicht, an dem der das Ausgangsmaterial für die Schraube bildende Draht abgeschert wird. Im Spitzenformungsbereich ist das Gewindegegenprofil wieder zumindest angenähert symmetrisch, d.h. daß die Asymmetrie schwächer ausgebildet ist oder sogar eine vollständige Symmetrie vorliegt. Für die der Erfindung zugrundeliegende Aufgabe kann es ausreichen, wenn beispielsweise der Flankenwinkel auf der einen Seite des Gewindes 20° und auf der anderen Seite des Gewindes 30° beträgt.

Fig. 6 zeigt in stark vergrößertem Maßstab einen Querschnitt durch einen Teil des Walzbackens 20 der Fig. 5, und zwar im Abscherpunkt 25. Im Schaftbereich 26, der links zu sehen ist, ist das Gewindegegenprofil 21 deutlich asymmetrisch ausgebildet, während im Spitzenbereich 27 das Gewindegegenprofil zwar asymmetrisch zu sein scheint, die beiden Flanken jedes Profilgangs aber unter dem gleichen Winkel gegenüber einer Senkrechten zur Längsachse der Schraube geneigt verlaufen. Aus Fig. 6 ist ebenfalls zu sehen, daß die Gewindegänge zur Spitze hin langsam niedriger werden.

Mit dem in Fig. 5 und 6 dargestellten Walzbacken wird das Verfahren nach der Erfindung ausgeführt. Es wird also zunächst im Einlaufbereich 22 ein vorzugsweise noch symmetrisches Gewinde geformt und im daran sich anschließenden Übergangsbereich in seine asymmetrische Form gebracht. Erst nach vollständiger Fertigung des Gewindes erfolgt die Formung der Schraubenspitze und anschließend das Abscheren. Während des Formens der Schraubenspitze erfolgt ggf. auch eine Glättung des gesamten Gewindes.

## Patentansprüche

1. Schraube mit
1.1 einem Schraubenschaft (1) mit einem Schraubengewinde (3), das
1.1.1 im Schaftbereich mindestens über einen Teil der Schaftlänge eine unsymmetrische Form aufweist und
1.1.2 im Bereich der Schraubenspitze (2) weniger asymmetrisch bis symmetrisch ausgebildet ist,
1.2 einem Schraubenkopf mit einem Antrieb sowie
1.3 einer Schraubenspitze (2), wobei
1.4 der Übergang (12) zwischen den Flanken (9, 10) des Gewindeganges (4, 5) des Gewindes (3) und dem Schaft (1) bzw. der Spitze (2) abgerundet verläuft und
1.5 mindestens ein Gewindegang (4) bis an die Schraubenspitze (2) heranreicht.

2. Schraube nach Anspruch 1, bei der das Verhältnis von Außendurchmesser zu Kerndurchmesser der Schraube größer als bei bekannten Schrauben gleichen Nenndurchmessers ist.

3. Schraube nach einem der vorhergehenden Ansprüche, mit mindestens einer Schabenut (6) im Bereich ihrer Schraubenspitze (2), vorzugsweise mit zwei diametral angeordneten Schabenuten (6), die insbesondere die Form einer in Längsrichtung der Schraube verlaufenden Kerbe aufweist, die insbesondere zwei Begrenzungsflächen (7) aufweist, die sich unter einem vorzugsweise etwa rechten Winkel treffen.

4. Schraube nach Anspruch 3, bei der die Schabenut (6) das Gewinde (3) durchsetzt und bis etwa auf den Kern (8) der Schraube reicht und vorzugsweise vor dem hinteren, dem zylindrischen Teil des Schraubenschaftes (1) zugewandten Ende der Schraubenspitze (2) endet.

5. Schraube nach einem der vorhergehenden Ansprüche mit einem Doppelganggewinde.

6. Schraube nach einem der vorhergehenden Ansprüche, bei der die vordere Flanke (10) des mindestens einen Gewindegangs (4, 5) flacher und die hintere Flanke (9) des mindestens einen Gewindegangs (4, 5) steiler verläuft.

7. Schraube nach einem der vorhergehenden Ansprüche, bei der die vordere Flanke (10) des mindestens einen Gewindegangs (4, 5) einen Winkel von etwa 30 bis 40° mit einer Radialebene einschließt.

8. Schraube nach einem der vorhergehenden Ansprüche, bei der die hintere Flanke (9) des mindestens einen Gewindegangs (4, 5) einen Winkel von weniger als 10°, vorzugsweise etwa 5°, mit einer Radialebene einschließt.

9. Schraube nach einem der vorhergehenden Ansprüche, bei der der Flankenwinkel des Gewindes im Bereich der Schraubenspitze (2) größer ist als im Bereich des Schafts (1).

10. Schraube nach einem der vorhergehenden Ansprüche, bei der ein Gewindegang (4) eines Doppelganggewindes bis zum vorderen Ende (13) der Schraube reicht, während der zweite Gewindegang (5) im Übergangsbereich (14) zur Spitze ausläuft oder bis in einen Bereich mit einem Abstand von einem Viertel der Steigung von der Spitze reicht.

11. Schraube nach einem der vorhergehenden Ansprüche, bei der bei einem Doppelganggewinde der bis zum vorderen Ende (13) der Schraubenspitze (2) reichende Gewindegang (4) im Bereich der Spitze (2) symmetrisch ausgebildet ist.

12. Schraube nach einem der vorhergehenden Ansprüche, bei dem der Spitzenwinkel der Schraubenspitze (2) etwa 20° bis 25° beträgt.

13. Walzbacken für eine Schraube nach einem der vorhergehenden Ansprüche, mit
1.3.1 einem Einlaufbereich (22) mit einem symmetrischen oder asymmetrischen Gewindegegenprofil,
1.3.2 einem sich an den Einlaufbereich (22) anschließenden Übergangsbereich (23) mit einem der endgültigen Gewindeform entsprechenden asymmetrischen Gewindegegenprofil,
1.3.3 einem sich an den Übergangsbereich (23) anschließenden Spitzenformungsbereich (24) mit mindestens angenähert symmetrischem Gewindegegenprofil.

14. Verfahren zum Herstellen einer Schraube nach einem, der Ansprüche 1 bis 12 mit Hilfe von Walzbacken nach Anspruch 13, wonach zunächst in einem Einlaufbereich (22) das Gewinde der Schraube symmetrisch oder asymmetrisch geformt, danach in einem Übergangsbereich (23) das vorhandene Gewinde in seine endgültige asymmetrische Form umgeformt und nach Fertigstellung des Gewindes im Schaftbereich die Schraubenspitze in einem Spitzenformungsbereich (24) des Walzbackens (20) geformt und dabei ggf. das Gewinde geglättet wird.

## Claims

1. Screw with
1.1 a screw shank (1) having a screw thread (3), which
1.1.1 has an asymmetrical shape in the shank region over at least part of the shank length and
1.1.2 has a less asymmetrical to symmetrical construction in the vicinity of the screw tip (2),
1.2 a screw head with a drive, as well as
1.3 a screw tip (2), in which
1.4 the transition (12) between the flanks (9, 10) of the thread course (4, 5) of the thread (3) and the shank (1) or tip (2) is rounded and
1.5 at least one thread course (4) extends up to the screw tip (2).

2. Screw according to claim 1, wherein the ratio of the external diameter to the core diameter of the screw is larger than in known screws having the same nominal diameter.

3. Screw according to any one of the preceding claims with at least one scraping groove (6) in the vicinity of its screw tip (2), preferably with two diametrically arranged scraping grooves (6), which in particular have the shape of a notch running in the longitudinal direction of the screw, which in particular has two boundary faces (7), which meet one another preferably at a right angle.

4. Screw according to claim 3, wherein the scraping groove (6) traverses the thread (3) and extends approximately to the screw core (8) and preferably ends upstream of the rear end of the screw tip (2) facing the cylindrical part of the screw shank (1).

5. Screw according to one of the preceding claims with a double-start thread.

6. Screw according to one of the preceding claims, wherein the front flank (10) of the at least one thread course (4, 5) is shallower and the rear flank (9) of the at least one thread course (4, 5) is steeper.

7. Screw according to one of the preceding claims, wherein the front flank (10) of the at least one thread course (4, 5) forms an angle of approximately 30 to 40° with a radial plane.

8. Screw according to one of the preceding claims, wherein the rear flank (9) of the at least one thread course (4, 5) forms an angle of less than 10°, preferably approximately 5°, with a radial plane.

9. Screw according to one of the preceding claims, wherein the thread angle is greater in the vicinity of the screw tip ((2) than in the vicinity of the shank (1).

10. Screw according to one of the preceding claims, wherein one thread course (4) of a double-start thread extends up to the front screw end (13), whereas the second thread course (5) stops in the transition region (14) to the tip or extends into an area at a distance of ¼ the pitch from the tip.

11. Screw according to one of the preceding claims, wherein in a double-start thread the thread course (4) extending to the front end (13) of the screw tip (2) is given a symmetrical construction in the vicinity of the tip (2).

12. Screw according to one of the preceding claims, wherein the angle of the screw tip (2) is approximately 20 to 25°.

13. Rolling die for a screw according to one of the preceding claims, with
1.3.1 an entry area (22) with a symmetrical or asymmetrical thread mating profile,
1.3.2 a transition area (23) connected to the entry area (22) and having an asymmetrical thread mating profile corresponding to the final thread shape,
1.3.3 a tip shaping area (24) connecting onto the transition area (23) and having an at least approximately symmetrical thread mating profile.

14. Method for producing a screw, particularly according to one of the clams 1 to 12 with the aid of rolling dies, according to claim 13, according to which initially in an entry area (22) the screw thread is symmetrically or asymmetrically shaped, then in a transition area (23) the thread is given its final asymmetrical shape and after producing the thread in the shank area the screw tip is shaped in a tip shaping area (24) of the rolling die (20) and optionally the thread is smoothed.

## Revendications

1. Vis présentant:
1.1 une tige de vis (1) présentant un filet de vis (3), qui
1.1.1 présente une forme asymétrique dans la région de la tige, au moins sur une partie de la longueur de la tige, et
1.1.2 qui est configurée sous forme moins asymétrique à symétrique dans la région de la pointe de vis (2),
1.2 une tête de vis présentant un entraînement ainsi que
1.3 une pointe de vis (2), tandis que
1.4 la transition (12) entre les flancs (9, 10) des spires de filet (4, 5) du filet (3) et de la tige (1) ou de la pointe (2) est arrondie, et
1.5 au moins une spire de filet (4) s'étend jusqu'à la pointe de la vis (2).

2. Vis selon la revendication 1, dans laquelle le rapport entre le diamètre extérieur et le diamètre de l'âme de la vis est plus grand que pour des vis connues de même diamètre nominal.

3. Vis selon l'une des revendications précédentes, présentant au moins une rainure taraudeuse (6) dans la région de sa pointe de vis (2), présentant de préférence deux rainures taraudeuses (6) disposées sur un diamètre, et qui présentent en particulier la forme d'une entaille s'étendant dans la direction longitudinale de la vis, cette entaille présentant en particulier deux surfaces frontières (7) qui se raccordent sous un angle de préférence sensiblement droit.

4. Vis selon la revendication 3, dans laquelle la rainure taraudeuse (6) traverse le filet (3) et s'étend jusque sensiblement sur l'âme (8) de la vis, et se termine de préférence avant l'extrémité arrière, tournée vers la partie cylindrique de la tige de vis (1), de la pointe de vis (2).

5. Vis selon l'une des revendications précédentes, avec un filet à double spire.

6. Vis selon l'une des revendications précédentes, dans laquelle le flanc avant (10) de la spire de filet (4, 5) au moins présente est plus plat, le flanc arrière (9) de la spire de filet (4, 5) au moins présent étant plus raide.

7. Vis selon l'une des revendications précédentes, dans laquelle le flanc avant (10) de la spire de filet (4, 5) au moins présente forme avec un plan radial un angle d'environ 30 à 40°.

8. Vis selon l'une des revendications précédentes, dans laquelle le flanc arrière (9) de la spire de filet (4, 5) au moins présente forme avec un plan radial un angle inférieur à 10°, de préférence d'environ 5°.

9. Vis selon l'une des revendications précédentes, dans laquelle l'angle du flanc du filet est plus grand dans la région de la pointe de vis (2) que dans la région de la tige (1).

10. Vis selon l'une des revendications précédentes, dans laquelle une spire de filet (4) d'un filet à double spire s'étend jusqu'à l'extrémité avant (13) de la vis, alors que la seconde spire de filet (5) se termine dans la région (14) de transition vers la pointe ou s'étend jusque dans une région distante d'un quart de pas de la pointe.

11. Vis selon l'une des revendications précédentes, dans laquelle pour un filet à double spire, la spire de filet (4) s'étendant jusqu'à l'extrémité avant (13) de la pointe de vis (2) est configurée sous forme symétrique dans la région de la pointe (2).

12. Vis selon l'une des revendications précédentes, dans laquelle l'angle de pointe de la pointe de vis (2) vaut environ 20° à 25°.

13. Matrice de laminage pour une vis selon l'une des revendications précédentes, présentant
1.3.1 une région d'entrée (22) présentant un profil de contre-filet symétrique ou asymétrique,
1.3.2 une région de transition (23) se raccordant à la région d'entrée (22), avec un profil asymétrique de contre-filet, correspondant à la forme finale du filet,
1.3.3 une région de formation de la pointe (24) se raccordant à la région de transition (23) avec un profil au moins approximativement symétrique du contre-filet.

14. Procédé de fabrication d'une vis selon l'une des revendications 1 à 12 à l'aide de macrices de laminage selon la revendication 13, suivant lequel le filet de la vis est tout d'abord configuré en forme symétrique ou asymétrique dans une région d'entrée (22), le filet existant étant ensuite déformé dans sa forme asymétrique finale dans une région de transition (23), et après réalisation du filet dans la région de la tige, la pointe de vis est formée dans une région (24) de la matrice de laminage (20) de formation de la pointe, le filet étant alors éventuellement poli.
